# EUROPÄISCHE PATENTSCHRIFT

(11) **EP 3 720 640 B1**
(45) Veröffentlichungstag und Bekanntmachung des Hinweises auf die Patenterteilung: **15.07.2026**
(21) Anmeldenummer: 18796694.0
(22) Anmeldetag: 12.11.2018
(51) Int. Cl.: B23K 9/095, B23K 9/20

(54) **BOLZENSCHWEISSVORRICHTUNG UND -VERFAHREN**
STUD WELDING DEVICE AND METHOD
APPAREIL ET PROCÉDÉ DE SOUDAGE DE GOUJONS

(30) Priorität: 04.12.2017 EP 17205154
(43) Veröffentlichungstag der Anmeldung: 14.10.2020
(73) Patentinhaber: Hilti Aktiengesellschaft, 9494 Schaan (LI)
(72) Erfinder: POPP, Uwe, 9443 Widnau (CH)
(74) Vertreter: Hilti Aktiengesellschaft Corporate Intellectual Property
(86) Internationale Anmeldenummer: PCT/EP2018/080866
(87) Internationale Veröffentlichungsnummer: WO 2019/110241

(56) Entgegenhaltungen:
- EP-A2- 2 404 696
- DE-A1- 10 136 992
- JP-A- H11 245 038
- US-A- 4 456 808

## Beschreibung

### Technisches Gebiet

Die Erfindung betrifft allgemein eine Vorrichtung und ein Verfahren zur Befestigung eines Bolzens an einem Untergrund (siehe beispielsweise JP H11 245038 A).

### Stand der Technik

Es sind etliche Vorrichtungen und Verfahren bekannt, mit denen verschiedene Bolzen in unterschiedlichen Anwendungsfällen an einem Untergrund befestigt werden. Wie beispielsweise aus US 4 456 808 A, EP 2 404 696 A2 oder DE 101 36 992 A1 bekannt, wird ein Bolzen mit dem Untergrund in Kontakt gebracht und mit elektrischem Strom beaufschlagt. Sobald der elektrische Strom zwischen dem Bolzen und dem Untergrund fliesst, wird der Bolzen unter Ausbildung eines Lichtbogens von dem Untergrund abgehoben. Aufgrund der freiwerdenden Energie verflüssigt sich teilweise das Material des Bolzens und des Untergrunds. Anschliessend wird der Bolzen in das verflüssigte Material eingetaucht, bevor dieses Material erkaltet und fest wird. Der Bolzen ist schliesslich stoffschlüssig mit dem Untergrund verbunden.

Um die notwendige Energie für die Verflüssigung des Materials des Bolzens und des Untergrunds in ausreichend kurzer Zeit zur Verfügung zu stellen, sind Vorrichtungen bekannt, welche einen elektrischen Strom mit sehr hoher Stromstärke erzeugen und über ein entsprechend dimensioniertes elektrisches Kabel dem Bolzen zuführen. Um ein Oxidieren des verflüssigten Materials zu vermeiden, ist es bekannt, die Kontaktstelle zwischen dem Bolzen und dem Untergrund mit einem Inertgas zu spülen.

Bei Anwendungen beispielsweise im Gebäude- oder Schiffsbau werden Bolzen in verschiedenen Grössen mit einem Gewinde verwendet, an welches ein Gegenstand geschraubt wird, um den Gegenstand an dem Untergrund zu befestigen. Einige Parameter des Befestigungsverfahrens wie beispielsweise die Dauer und die elektrische Leistung des elektrischen Stroms sind von einem Anwender an der Vorrichtung einzustellen und an den verwendeten Bolzen anzupassen. Mittels einer Sichtprüfung beurteilt der Anwender schliesslich die Qualität der Verbindung zwischen dem Bolzen und dem Untergrund. Die Verbindungsqualität hängt damit auch von der Erfahrung und den Fähigkeiten des Anwenders ab.

### Darstellung der Erfindung

Aufgabe der Erfindung ist es, eine Vorrichtung und/oder ein Verfahren zur Verfügung zu stellen, mit welchem eine Befestigung eines Bolzens an einem Untergrund vereinfacht und/oder verbessert wird.

Gegenstand dieser Anmeldung ist eine Vorrichtung zum Schweissen eines Schweissbolzens an einen Untergrund gemäß Anspruch 1.

Gemäss einer vorteilhaften Ausgestaltung umfasst der die Wärmeleistung charakterisierende Parameter des Schweissvorgangs eine elektrische Spannung und/oder eine Stromstärke des Schweissstroms.

Gemäss einer vorteilhaften Ausgestaltung umfasst die Vorrichtung eine Eingabeeinrichtung, mit der der vorbestimmte Wert durch einen Anwender einstellbar ist.

Gemäss einer weiteren vorteilhaften Ausgestaltung ist die Vorrichtung dazu geeignet, den vorbestimmten Wert aufgrund einer oder mehrerer Grössen, welche eine gewünschte in das Material des Schweissbolzens und/oder des Untergrunds eingebrachte Wärmeenergie beeinflussen, einzustellen. Bevorzugt umfassen die Grössen, welche die gewünschte in das Material des Schweissbolzens und/oder des Untergrunds eingebrachte Wärmeenergie beeinflussen, eine Umgebungstemperatur, eine Abmessung und/oder ein Material des Schweissbolzens und/oder des Untergrunds.

Gemäss einer vorteilhaften Ausgestaltung ist die Vorrichtung dazu geeignet, einen zeitlichen Verlauf der das Material des Schweissbolzens und/oder des Untergrunds beaufschlagenden Wärmeleistung beziehungsweise des die Wärmeleistung charakterisierenden Parameters aufzuzeichnen. Bevorzugt ist die Steuereinrichtung dazu geeignet, auf einen nicht ordnungsgemäss verlaufenen Schweissvorgang zu schliessen, wenn der aufgezeichnete Verlauf der Wärmeleistung beziehungsweise des die Wärmeleistung charakterisierenden Parameters von einem vorgegebenen Verlauf abweicht. Ebenfalls bevorzugt ist die Steuereinrichtung dazu geeignet, während desselben oder eines nachfolgenden Schweissvorgangs ein oder mehrere Schweissparameter nachzujustieren, wenn der aufgezeichnete Verlauf der Wärmeleistung beziehungsweise des die Wärmeleistung charakterisierenden Parameters von einem vorgegebenen Verlauf abweicht. Besonders bevorzugt umfassen die nachjustierbaren Schweissparameter eine elektrische Spannung und/oder eine Stromstärke des Schweissstroms, und/oder eine Geschwindigkeit und/oder eine Position und/oder eine Bewegungsrichtung des Schweissbolzens.

Gemäss einem weiteren Aspekt der Anmeldung umfasst die Vorrichtung eine Einrichtung zur Beeinflussung der von der Bolzeneintaucheinrichtung bewirkten Geschwindigkeit des Schweissbolzens, während der Schweissbolzen in das verflüssigte Material des Schweissbolzens und/oder des Untergrundes eingetaucht wird. Dies ermöglicht eine kontrollierte Bewegung des Schweissbolzens, so dass der Schweissvorgang stabilisiert wird.

Eine vorteilhafte Ausgestaltung besteht darin, dass die Einrichtung zur Beeinflussung der Geschwindigkeit des Schweissbolzens einen ersten Aktor und einen zweiten Aktor aufweist. Bevorzugt umfasst der erste Aktor einen ersten Hubmagneten. Ebenfalls bevorzugt umfasst der zweite Aktor einen zweiten Hubmagneten.

Eine vorteilhafte Ausgestaltung besteht darin, dass der zweite Aktor gegenüber dem ersten Aktor in entgegengesetzter Richtung wirkt. Bei einer alternativen Ausgestaltung wirkt der zweite Aktor in der gleichen Richtung wie der erste Aktor.

Eine vorteilhafte Ausgestaltung besteht darin, dass ein Einfluss des zweiten Aktors auf die von der Bolzeneintaucheinrichtung bewirkte Geschwindigkeit des Schweissbolzens steuerbar ist. Bei einer alternativen Ausgestaltung ist ein Einfluss des zweiten Aktors auf die von der Bolzeneintaucheinrichtung bewirkte Geschwindigkeit des Schweissbolzens vorgegeben.

Eine vorteilhafte Ausgestaltung besteht darin, dass die Vorrichtung eine Steuereinrichtung zum Steuern der Bolzenabhubeinrichtung und/oder der Bolzeneintaucheinrichtung und/oder der Einrichtung zur Beeinflussung der Geschwindigkeit des Schweissbolzens umfasst.

Eine vorteilhafte Ausgestaltung besteht darin, dass die Einrichtung zur Beeinflussung der Geschwindigkeit des Schweissbolzens ein lineares oder nichtlineares Getriebe, bevorzugt ein Koppelgetriebe oder ein Kniehebelgetriebe, umfasst, welches eine Bewegung der Bolzenabhubeinrichtung und/oder der Bolzeneintaucheinrichtung in eine Bewegung des Bolzenhalters überträgt.

Eine vorteilhafte Ausgestaltung besteht darin, dass die Einrichtung zur Beeinflussung der Geschwindigkeit des Schweissbolzens dazu vorgesehen ist, eine von der Bolzeneintaucheinrichtung hervorgerufene Bewegung des Schweissbolzens zu verzögern und/oder umzudrehen, dies bevorzugt mehrfach.

Gemäss einem weiteren Aspekt der Anmeldung umfasst die Vorrichtung eine Detektionseinrichtung zur Erfassung von beim Schweissvorgang, bevorzugt während des Eintauchens des Schweissbolzens in das verflüssigte Material des Schweissbolzens und/oder des Untergrunds, erzeugten Emissionen. Dies ermöglicht, die Qualität der Schweissverbindung zwischen dem Schweissbolzen und dem Untergrund nach objektiven Kriterien zu beurteilen.

Eine vorteilhafte Ausgestaltung besteht darin, dass die Detektionseinrichtung zur Erfassung von akustischen, elektrischen, magnetischen und/oder optischen Emissionen vorgesehen ist.

Eine vorteilhafte Ausgestaltung besteht darin, dass die Vorrichtung eine Steuereinrichtung zum Steuern eines oder mehrerer Parameter des Schweissvorgangs in Abhängigkeit von den erfassten Emissionen umfasst. Bevorzugt ist die Steuereinrichtung zum Steuern einer elektrischen Spannung und/oder einer Stromstärke des Schweissstroms, und/oder einer Geschwindigkeit und/oder einer Position und/oder einer Bewegungsrichtung des Schweissbolzens vorgesehen.

Eine vorteilhafte Ausgestaltung besteht darin, dass die Vorrichtung eine Ausgabeeinrichtung zur Ausgabe von Informationen über die erfassten Emissionen und/oder von aus den erfassten Emissionen abgeleiteten Informationen aufweist. Bevorzugt umfasst die Ausgabeeinrichtung eine visuelle Anzeige.

Eine vorteilhafte Ausgestaltung besteht darin, dass die von der Ausgabeeinrichtung ausgebbaren Informationen Informationen über eine Güte des Schweissvorgangs und/oder über Massnahmen zur Verbesserung des Schweissvorgangs umfassen.

Eine weitere vorteilhafte Ausgestaltung besteht darin, dass die Ausgabeeinrichtung eine drahtlose Übertragungseinrichtung umfasst.

Gemäss einem weiteren Aspekt der Anmeldung umfasst die Vorrichtung eine Identifikationseinrichtung zur Erfassung einer oder mehrerer Bolzeneigenschaften des Schweissbolzens und eine Steuereinrichtung zum Steuern eines oder mehrerer Parameter des Schweissvorgangs in Abhängigkeit von den erfassten Bolzeneigenschaften. Dadurch ist es für einen Anwender der Vorrichtung unter Umständen nicht erforderlich, die genannten Parameter des Schweissvorgangs selbst einzustellen.

Eine vorteilhafte Ausgestaltung besteht darin, dass die Identifikationseinrichtung zur Erfassung einer Länge und/oder einer Breite und/oder eines Durchmessers und/oder eines Materials und/oder eines werkseitig an dem Schweissbolzen angebrachten Identifikationselements des Schweissbolzens vorgesehen ist. Wird ein solches Identifikationselement erfasst, ist es möglich, dem Schweissbolzen eine oder mehrere der genannten Grössen und/oder das Material zuzuordnen.

Eine weitere vorteilhafte Ausgestaltung besteht darin, dass die Steuereinrichtung zum Steuern einer elektrischen Spannung und/oder einer Stromstärke des Schweissstroms, und/oder einer Geschwindigkeit und/oder einer Position und/oder einer Bewegungsrichtung des Schweissbolzens, jeweils auf Basis der erfassten Bolzeneigenschaften des Schweissbolzens, vorgesehen ist.

Eine weitere vorteilhafte Ausgestaltung besteht darin, dass die Vorrichtung eine Ausgabeeinrichtung zur Ausgabe von Informationen über die erfassten Bolzeneigenschaften und/oder von aus den erfassten Bolzeneigenschaften abgeleiteten Informationen aufweist. Bevorzugt umfasst die Ausgabeeinrichtung eine drahtlose Übertragungseinrichtung.

Gemäss einem weiteren Aspekt der Anmeldung umfasst die Vorrichtung eine Erfassungseinrichtung zur Erfassung eines oder mehrerer Parameter des Schweissvorgangs, einen Datenspeicher zur Speicherung der von der Erfassungseinrichtung erfassten Parameter und eine Steuereinrichtung, welche dafür geeignet ist, von der Erfassungseinrichtung während eines aktuellen Schweissvorgangs erfasste Parameter mit in dem Datenspeicher gespeicherten Parametern zu vergleichen. Dadurch ist es möglich, Veränderungen festzustellen, welche im Laufe des Betriebs der Vorrichtung auftreten, beispielsweise durch Verschleiss und/oder Verschmutzung.

Eine vorteilhafte Ausgestaltung besteht darin, dass die Vorrichtung weiterhin eine Ausgabeeinrichtung umfasst, wobei die Steuereinrichtung dafür vorgesehen ist, Unterschiede zwischen den von der Erfassungseinrichtung während des aktuellen Schweissvorgangs erfassten Parametern und den in dem Datenspeicher gespeicherten Parametern und/oder aus solchen Unterschieden abgeleitete Informationen mittels der Ausgabeeinrichtung auszugeben. Bevorzugt umfassen die abgeleiteten Informationen eine Empfehlung und/oder zur Reinigung und/oder Wartung der Vorrichtung.

Eine weitere vorteilhafte Ausgestaltung besteht darin, dass die Ausgabeeinrichtung eine visuelle Anzeige umfasst. Eine weitere vorteilhafte Ausgestaltung besteht darin, dass die Ausgabeeinrichtung eine drahtlose Übertragungseinrichtung umfasst.

Eine weitere vorteilhafte Ausgestaltung besteht darin, dass die von der Erfassungseinrichtung erfassbaren Parameter des Schweissvorgangs eine elektrische Spannung und/oder eine Stromstärke des Schweissstroms, und/oder eine Geschwindigkeit und/oder eine Position und/oder eine Bewegungsrichtung des Schweissbolzens und/oder eine Anzahl durchgeführter Schweissvorgänge umfassen.

Eine weitere vorteilhafte Ausgestaltung besteht darin, dass die Steuereinrichtung zum Steuern eines oder mehrerer Parameter eines nachfolgenden Schweissvorgangs in Abhängigkeit von den von der Erfassungseinrichtung während eines vorangegangenen Schweissvorgangs erfassten Parametern geeignet ist. Dadurch ist unter Umständen eine Kompensation der festgestellten Veränderungen von Parametern des Schweissvorgangs möglich.

Gemäss einem weiteren Aspekt der Anmeldung eignet sich die Vorrichtung zum Schweissen eines Schweissbolzens an eine vorgegebene Stelle eines Untergrunds, und umfasst eine Einrichtung zum Auffinden der vorgegebenen Stelle.

Eine weitere vorteilhafte Ausgestaltung besteht darin, dass die Einrichtung zum Auffinden der vorgegebenen Stelle eine Erkennungseinrichtung zum Erkennen einer die vorgegebene Stelle gegenüber einer übrigen Oberfläche des Untergrunds auszeichnenden Grösse umfasst.

Bevorzugt umfasst die die vorgegebene Stelle gegenüber der übrigen Oberfläche des Untergrunds auszeichnende Grösse einen Kontaktwiderstand zwischen der Vorrichtung und dem Untergrund und/oder zwischen dem Bolzen und dem Untergrund. Ebenfalls bevorzugt umfasst die die vorgegebene Stelle gegenüber der übrigen Oberfläche des Untergrunds auszeichnende Grösse einen Höhenunterschied zwischen der vorgegebenen Stelle und der übrigen Oberfläche des Untergrunds. Besonders bevorzugt umfasst die Erkennungseinrichtung einen optischen Sensor zur Erkennung eines Abstands zwischen der Vorrichtung und einem gegenüber dem Bolzen und/oder dem Bolzenhalter angeordneten Bereich des Untergrunds. Alternativ oder zusätzlich ist besonders bevorzugt die Erkennungseinrichtung dafür vorgesehen, eine Position des Schweissbolzens und/oder des Bolzenhalters gegenüber der übrigen Vorrichtung zu erfassen, um den Höhenunterschied zwischen der vorgegebenen Stelle und der übrigen Oberfläche des Untergrunds zu erkennen.

Eine weitere vorteilhafte Ausgestaltung besteht darin, dass die Einrichtung zum Auffinden der vorgegebenen Stelle eine Projektionseinrichtung zur Projektion einer oder mehrerer Hilfslinien umfasst. Eine weitere vorteilhafte Ausgestaltung besteht darin, dass die Vorrichtung eines oder mehrere Anzeigeelemente aufweist.

Gemäss einem weiteren Aspekt der Anmeldung umfasst die Vorrichtung eine Bestimmungseinrichtung zur Bestimmung einer oder mehrerer die von der Bolzeneintaucheinrichtung bewirkte Eintauchbewegung des Schweissbolzens in das verflüssigte Material des Schweissbolzens und/oder des Untergrundes kennzeichnender Grössen. Dadurch ist unter Umständen eine objektive Beurteilung der Qualität der Schweissverbindung zwischen dem Schweissbolzen und dem Untergrund ermöglicht.

Eine vorteilhafte Ausgestaltung besteht darin, dass die Bestimmungseinrichtung dafür geeignet ist, eine zeitliche Dauer der Eintauchbewegung und/oder eine Geschwindigkeit des Schweissbolzens während der Eintauchbewegung und/oder eine Position des Schweissbolzens vor der Abhubbewegung und/oder nach der Eintauchbewegung zu bestimmen.

Eine weitere vorteilhafte Ausgestaltung besteht darin, dass die Vorrichtung weiterhin eine Steuereinrichtung zum Steuern der Bolzenabhubeinrichtung und/oder der Bolzeneintaucheinrichtung und/oder der elektrischen Spannung und/oder der Stromstärke des Schweissstroms umfasst.

Eine weitere vorteilhafte Ausgestaltung besteht darin, dass die Vorrichtung weiterhin eine Steuereinrichtung zum Steuern eines oder mehrerer Parameter des Schweissvorgangs in Abhängigkeit von den bestimmten Grössen umfasst. Bevorzugt ist die Steuereinrichtung zum Steuern einer elektrischen Spannung und/oder einer Stromstärke des Schweissstroms, und/oder einer Geschwindigkeit und/oder einer Position und/oder einer Bewegungsrichtung des Schweissbolzens vorgesehen.

Eine weitere vorteilhafte Ausgestaltung besteht darin, dass die Vorrichtung weiterhin eine Ausgabeeinrichtung zur Ausgabe von Informationen über die bestimmten Grössen und/oder von aus den bestimmten Grössen abgeleiteten Informationen umfasst. Bevorzugt umfasst die Ausgabeeinrichtung eine visuelle Anzeige und/oder eine drahtlose Übertragungseinrichtung.

Eine weitere vorteilhafte Ausgestaltung besteht darin, dass die von der Ausgabeeinrichtung ausgebbaren Informationen Informationen über eine Güte des Schweissvorgangs und/oder über Massnahmen zur Verbesserung des Schweissvorgangs umfassen.

Ebenfalls Gegenstand dieser Anmeldung ist ein Verfahren zum Schweissen eines Schweissbolzens an einen Untergrund gemäß Anspruch 6.

Ebenfalls bevorzugt umfasst der die Wärmeleistung charakterisierende Parameter des Schweissvorgangs eine elektrische Spannung und/oder eine Stromstärke des Schweissstroms.

Gemäss einer vorteilhaften Ausgestaltung wird der vorbestimmte Wert durch einen Anwender eingestellt.

Gemäss einer weiteren vorteilhaften Ausgestaltung werden eine oder mehrere eine gewünschte in das Material des Schweissbolzens und/oder des Untergrunds eingebrachte Wärmeenergie beeinflussende Grössen erfasst und/oder von einem Anwender zur Verfügung gestellt, wobei der vorbestimmte Wert aufgrund dieser Grössen eingestellt wird. Bevorzugt umfassen die die gewünschte in das Material des Schweissbolzens und/oder des Untergrunds eingebrachte Wärmeenergie beeinflussenden Grössen eine Umgebungstemperatur, eine Abmessung und/oder ein Material des Schweissbolzens und/oder des Untergrunds.

Gemäss einer vorteilhaften Ausgestaltung wird ein zeitlicher Verlauf der das Material des Schweissbolzens und/oder des Untergrunds beaufschlagenden Wärmeleistung beziehungsweise des die Wärmeleistung charakterisierenden Parameters aufgezeichnet. Bevorzugt wird auf einen nicht ordnungsgemäss verlaufenen Schweissvorgang geschlossen, wenn der aufgezeichnete Verlauf der Wärmeleistung beziehungsweise des die Wärmeleistung charakterisierenden Parameters von einem vorgegebenen Verlauf abweicht. Ebenfalls bevorzugt werden während desselben oder eines nachfolgenden Schweissvorgangs ein oder mehrere Schweissparameter nachjustiert, wenn der aufgezeichnete Verlauf der Wärmeleistung beziehungsweise des die Wärmeleistung charakterisierenden Parameters von einem vorgegebenen Verlauf abweicht.

Gemäss einem weiteren Aspekt der Anmeldung wird bei dem Verfahren die Geschwindigkeit des Schweissbolzens beeinflusst, während der Schweissbolzen in das verflüssigte Material des Schweissbolzens beziehungsweise des Untergrunds eingetaucht wird.

Eine vorteilhafte Ausgestaltung besteht darin, dass zur Beeinflussung der Geschwindigkeit des Schweissbolzens ein erster Aktor, welcher bevorzugt einen ersten Hubmagneten umfasst, und ein zweiter Aktor, welcher bevorzugt einen zweiten Hubmagneten umfasst, aktiviert werden. Bevorzugt wirkt der zweite Aktor gegenüber dem ersten Aktor in entgegengesetzter Richtung.

Eine vorteilhafte Ausgestaltung besteht darin, dass ein Einfluss des zweiten Aktors auf die von der Bolzeneintaucheinrichtung bewirkte Geschwindigkeit des Schweissbolzens gesteuert wird. Eine alternative Ausgestaltung besteht darin, dass ein Einfluss des zweiten Aktors auf die von der Bolzeneintaucheinrichtung bewirkte Geschwindigkeit des Schweissbolzens vorgegeben ist.

Eine weitere vorteilhafte Ausgestaltung besteht darin, dass der erste Aktor und der zweite Aktor abwechselnd und/oder gleichzeitig betrieben werden.

Eine weitere vorteilhafte Ausgestaltung besteht darin, dass eine Bewegung des Schweissbolzens während des Eintauchens in das verflüssigte Material des Schweissbolzens beziehungsweise des Untergrunds, insbesondere mehrfach, verzögert und/oder umgedreht wird.

Gemäss einem weiteren Aspekt der Anmeldung werden bei dem Verfahren beim Schweissvorgang erzeugte Emissionen erfasst, bevorzugt während des Eintauchens des Schweissbolzens in das verflüssigte Material des Schweissbolzens und/oder des Untergrunds.

Eine weitere vorteilhafte Ausgestaltung besteht darin, dass es sich bei den erfassten Emissionen um akustische, elektrische, magnetische und/oder optische Emissionen handelt.

Eine weitere vorteilhafte Ausgestaltung besteht darin, dass ein oder mehrere Parameter des Schweissvorgangs in Abhängigkeit von den erfassten Emissionen gesteuert werden.

Eine weitere vorteilhafte Ausgestaltung besteht darin, dass es sich bei dem Parameter um eine elektrische Spannung und/oder eine Stromstärke des Schweissstroms, und/oder eine Geschwindigkeit und/oder eine Position und/oder eine Bewegungsrichtung des Schweissbolzens handelt.

Eine weitere vorteilhafte Ausgestaltung besteht darin, dass Informationen über die erfassten Emissionen und/oder aus den erfassten Emissionen abgeleitete Informationen ausgegeben werden. Bevorzugt werden Informationen über eine Güte des Schweissvorgangs und/oder über Massnahmen zur Verbesserung des Schweissvorgangs ausgegeben.

Eine weitere vorteilhafte Ausgestaltung besteht darin, dass einem Anwender nach der Durchführung eines Schweissvorgangs ermöglicht wird, eine Beurteilung einer Güte des Schweissvorgangs einzugeben, und wobei eine Eingabe des Anwenders dazu verwendet wird, eine Güte zukünftiger Schweissvorgänge zu beurteilen.

Gemäss einem weiteren Aspekt der Anmeldung werden eine oder mehrere Bolzeneigenschaften des Schweissbolzens erfasst und ein oder mehrere Parameter des Schweissvorgangs in Abhängigkeit von den erfassten Bolzeneigenschaften gesteuert.

Eine vorteilhafte Ausgestaltung besteht darin, dass als Bolzeneigenschaft eine Länge und/oder eine Breite und/oder ein Durchmesser und/oder ein Material und/oder ein werkseitig an dem Schweissbolzen angebrachtes Identifikationselement des Schweissbolzens erfasst wird.

Eine weitere vorteilhafte Ausgestaltung besteht darin, dass als Parameter des Schweissvorgangs eine elektrische Spannung und/oder eine Stromstärke des Schweissstroms, und/oder eine Geschwindigkeit und/oder eine Position und/oder eine Bewegungsrichtung des Schweissbolzens gesteuert wird.

Eine weitere vorteilhafte Ausgestaltung besteht darin, dass Informationen über die erfassten Bolzeneigenschaften und/oder aus den erfassten Bolzeneigenschaften abgeleitete Informationen ausgegeben werden.

Bevorzugt werden die Informationen über die erfassten Bolzeneigenschaften beziehungsweise die aus den erfassten Bolzeneigenschaften abgeleiteten Informationen drahtlos übertragen.

Gemäss einem weiteren Aspekt der Anmeldung werden bei dem Verfahren ein oder mehrere Parameter des Schweissvorgangs erfasst und gespeichert. Während eines aktuellen Schweissvorgangs von der Erfassungseinrichtung erfasste Parameter werden mit in dem Datenspeicher gespeicherten Parametern verglichen.

Eine vorteilhafte Ausgestaltung besteht darin, dass Unterschiede zwischen den von der Erfassungseinrichtung während des aktuellen Schweissvorgangs erfassten Parametern und den in dem Datenspeicher gespeicherten Parametern und/oder aus solchen Unterschieden abgeleitete Informationen ausgegeben werden. Bevorzugt umfassen die abgeleiteten Informationen eine Empfehlung und/oder Aufforderung zur Reinigung und/oder Wartung der Vorrichtung.

Eine vorteilhafte Ausgestaltung besteht darin, dass die Unterschiede zwischen den von der Erfassungseinrichtung während des aktuellen Schweissvorgangs erfassten Parametern und den in dem Datenspeicher gespeicherten Parametern beziehungsweise die aus solchen Unterschieden abgeleiteten Informationen visuell ausgegeben werden. Eine weitere vorteilhafte Ausgestaltung besteht darin, dass die Unterschiede zwischen den von der Erfassungseinrichtung während des aktuellen Schweissvorgangs erfassten Parametern und den in dem Datenspeicher gespeicherten Parametern beziehungsweise die aus solchen Unterschieden abgeleiteten Informationen drahtlos übertragen werden.

Eine weitere vorteilhafte Ausgestaltung besteht darin, dass die erfassten Parameter des Schweissvorgangs eine elektrische Spannung und/oder eine Stromstärke des Schweissstroms, und/oder eine Geschwindigkeit und/oder eine Position und/oder eine Bewegungsrichtung des Schweissbolzens und/oder eine Anzahl durchgeführter Schweissvorgänge umfassen.

Eine weitere vorteilhafte Ausgestaltung besteht darin, dass ein oder mehrere Parameter eines nachfolgenden Schweissvorgangs in Abhängigkeit von den während eines vorangegangenen Schweissvorgangs erfassten Parametern gesteuert werden.

Gemäss einem weiteren Aspekt der Anmeldung werden bei dem Verfahren eine oder mehrere die von der Bolzeneintaucheinrichtung bewirkte Eintauchbewegung des Schweissbolzens in das verflüssigte Material des Schweissbolzens und/oder des Untergrundes kennzeichnende Grössen bestimmt.

Eine vorteilhafte Ausgestaltung besteht darin, dass ein oder mehrere Parameter des Schweissvorgangs in Abhängigkeit von den bestimmten Grössen gesteuert werden. Bevorzugt handelt es sich bei den gesteuerten Parametern um eine elektrische Spannung und/oder eine Stromstärke des Schweissstroms, und/oder eine Geschwindigkeit und/oder eine Position und/oder eine Bewegungsrichtung des Schweissbolzens.

Eine weitere vorteilhafte Ausgestaltung besteht darin, dass Informationen über die bestimmten Grössen und/oder aus den bestimmten Grössen abgeleitete Informationen ausgegeben werden. Bevorzugt handelt es sich bei diesen Informationen um Informationen über eine Güte des Schweissvorgangs und/oder über Massnahmen zur Verbesserung des Schweissvorgangs.

Eine weitere vorteilhafte Ausgestaltung besteht darin, dass einem Anwender nach der Durchführung eines Schweissvorgangs ermöglicht wird, eine Beurteilung einer Güte des Schweissvorgangs einzugeben, und wobei eine Eingabe des Anwenders dazu verwendet wird, eine Güte zukünftiger Schweissvorgänge zu beurteilen.

### Ausführungsbeispiele

Die Erfindung wird nachstehend anhand von Ausführungsbeispielen unter Bezugnahme auf die Zeichnungen näher erläutert. Es zeigen:
- Fig. 1: schematisch eine Schweissvorrichtung,
- Fig. 2: schematisch eine Schweisspistole,
- Fig. 3: einen Untergrund,
- Fig. 4: eine Schweisspistole und
- Fig. 5: ein Ablaufschema eines Schweissverfahrens.

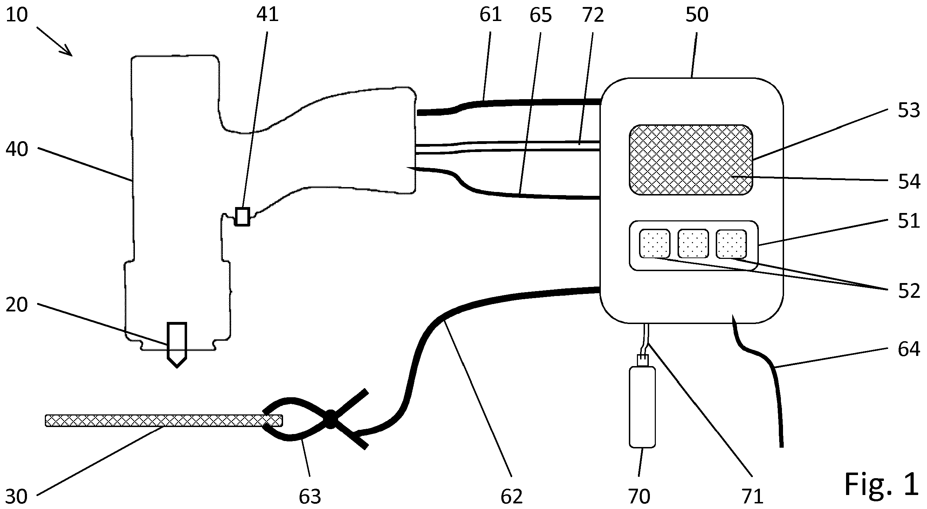

In Fig. 1 ist eine Schweissvorrichtung 10 zum Schweissen eines Schweissbolzens 20 an einen Untergrund 30 schematisch dargestellt. Ein Material des Schweissbolzens 20 und ein Material des Untergrunds 30 sind elektrisch leitfähig, insbesondere metallisch. Die Schweissvorrichtung 10 umfasst eine Schweisspistole 40 mit einem als Tastschalter ausgebildeten Auslöseschalter 41, ein Schweissgerät 50, ein erstes elektrisches Kabel 61, ein zweites elektrisches Kabel 62 mit einer Anschlussklemme 63, ein beispielsweise als Netzkabel ausgebildetes elektrisches Versorgungskabel 64, eine elektrische Kommunikationsleitung 65, ein als Gasflasche ausgebildetes Gasreservoir 70, eine schlauchförmige Gasversorgungsleitung 71 und einen Gasschlauch 72.

Das erste Kabel 61 dient einer Versorgung des Schweissbolzens 20 mit elektrischem Strom durch das Schweissgerät 50. Das zweite Kabel 62 dient einer elektrischen Verbindung des Untergrunds 30 mit dem Schweissgerät 50, wenn die Anschlussklemme 63 an den Untergrund 30 geklemmt ist. Bei Berührung des Schweissbolzens 20 mit dem Untergrund 30 schliesst sich ein Stromkreis, so dass der Schweissbolzen 20 von dem Schweissgerät 50 mit Schweissstrom beaufschlagbar ist, welcher beispielsweise als Gleichstrom oder Wechselstrom ausgebildet ist. Die Schweisspistole 40 umfasst zu diesem Zweck ein in Fig. 1 nicht gezeigtes Schweissstrom-Kontaktelement. Das Schweissgerät 50 umfasst eine nicht gezeigte Einrichtung zur Konvertierung von elektrischem Strom aus dem Versorgungskabel 64 in Schweissstrom, welche beispielsweise einen elektrischen Kondensator, einen Thyristor, einen Bipolar-Transistor mit isolierter Gate-Elektrode oder andere leistungselektronische Bauelemente sowie ein zugehöriges Steuergerät mit einem Mikroprozessor umfasst, um den Schweissstrom mit gewünschter Spannung und Stromstärke bereitzustellen.

Die Gasversorgungsleitung 71 und der Gasschlauch 72 dienen einer Versorgung eines Kontaktbereichs zwischen dem Schweissbolzen 20 und dem Untergrund 30 mit einem Schutzgas aus dem Gasreservoir 70, um den Kontaktbereich während eines Schweissvorgangs vor einer Oxidation durch Sauerstoff einer Umgebung zu schützen. Zur Steuerung eines Gasflusses zu dem Kontaktbereich umfasst das Gasreservoir 70, die Gasversorgungsleitung 71, das Schweissgerät 50, der Gasschlauch 72 oder die Schweisspistole 40 ein nicht gezeigtes, insbesondere regelbares Ventil auf.

Das Schweissgerät 50 weist eine Eingabeeinrichtung 51 mit Betätigungselementen 52 sowie eine Ausgabeeinrichtung 53 mit einem visuellen Anzeigeelement 54 und einer drahtlosen Übertragungseinheit auf. Die Eingabeeinrichtung 51 dient der Eingabe von Parametern eines mit der Schweissvorrichtung 10 durchzuführenden Schweissverfahrens, wie beispielsweise der elektrischen Spannung, Stromstärke, Leistung und zeitliche Dauer des Schweissstroms, Position und Geschwindigkeit des Bolzens und so weiter, durch einen Anwender der Schweissvorrichtung 10. Die Ausgabeeinrichtung 53 dient der Ausgabe von Informationen, wie beispielsweise Informationen über Parameter des Schweissverfahrens, Informationen über erfasste Emissionen des Schweissverfahrens oder andere Grössen, Informationen über eine Güte des Schweissvorgangs, Informationen über Massnahmen zur Verbesserung des Schweissvorgangs, Informationen über erfasste Eigenschaften des Schweissbolzens oder aus den vorgenannten Grössen abgeleitete Informationen, und/oder Empfehlungen oder Anweisungen zur Reinigung und/oder Wartung der Schweissvorrichtung 10, insbesondere der Schweisspistole 40, an den Anwender.

Die Kommunikationsleitung 65 dient einer Kommunikation zwischen der Schweisspistole 40, insbesondere einer in Fig. 1 nicht gezeigten Steuereinrichtung der Schweisspistole 40, und dem Schweissgerät 50, insbesondere dem Steuergerät und/oder der Eingabeeinrichtung 51 und/oder der Ausgabeeinrichtung 53. Durch diese Kommunikation wird beispielsweise ein Austausch von Informationen über die Parameter eines Schweissvorgangs bewerkstelligt, um beispielsweise eine Synchronisation des Schweissstroms mit einer Bewegung des Schweissbolzens 20 zu erreichen oder zu erleichtern. Bei nicht gezeigten Ausführungsbeispielen geschieht die Kommunikation zwischen der Schweisspistole und dem Schweissgerät drahtlos, per Funk oder mittels des ersten elektrischen Kabels, welches den Schweissstrom führt.

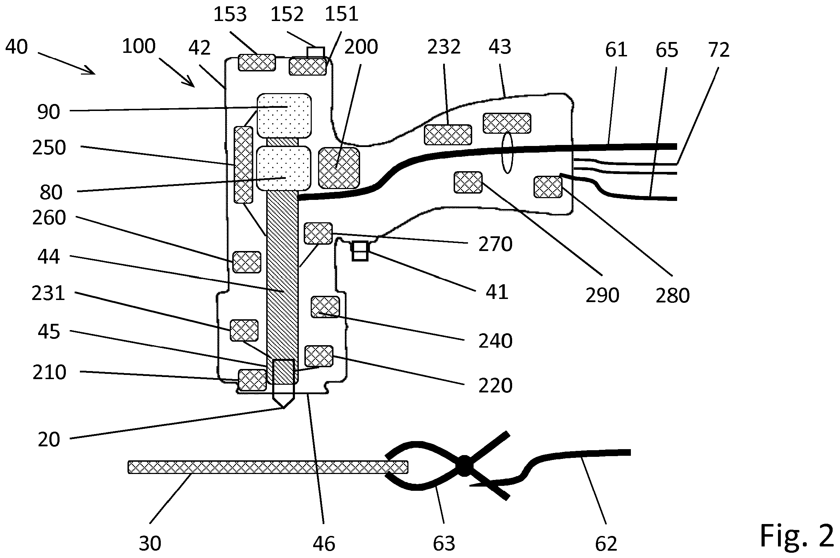

In Fig. 2 ist die Schweisspistole 40 mit dem Schweissbolzen 20 zur Befestigung an dem Untergrund 30 detaillierter dargestellt. Die Schweisspistole 40 weist ein Gehäuse 42 mit einer Mündung 46 auf, von welchem ein Handgriff 43 mit dem Auslöseschalter 41 abragt. Ebenfalls dargestellt sind das erste elektrische Kabel 61, das zweite elektrische Kabel 62 mit der an den Untergrund 30 geklemmten Anschlussklemme 63, die elektrische Kommunikationsleitung 65 und der Gasschlauch 72.

Die Schweisspistole 40 weist ferner einen Bolzenhalter 44 auf, an welchem der Schweissbolzen 20 während eines Schweissvorgangs gehalten ist. Hierzu umfasst der Bolzenhalter beispielsweise zwei, drei, vier oder mehr nicht im Einzelnen gezeigte federnde Arme, zwischen die der Schweissbolzen 20 eingesteckt und mittels Klemmsitz gehalten wird. Die Schweisspistole 40 weist ferner ein Schweissstrom-Kontaktelement 45 zur Beaufschlagung des Schweissbolzens 20 mit einem Schweissstrom auf, welches in den Bolzenhalter 44 integriert ist, beispielsweise in Form eines oder mehrerer der federnden Arme.

Die Schweisspistole 40 weist ferner eine Steuereinrichtung 200 zum Steuern der verschiedenen Komponenten und Einrichtungen der Schweisspistole und des Schweissgeräts 50 auf. Die Steuereinrichtung 200 ist zum Steuern eines oder mehrerer Parameter des Schweissvorgangs vorgesehen. Die Steuereinrichtung 200 umfasst dazu verschiedene elektronische Bauteile, wie beispielsweise einen oder mehrere Mikroprozessoren, einen oder mehrere temporäre oder dauerhafte Datenspeicher und dergleichen, auf.

Die Schweisspistole 40 weist ferner eine als ein erster Hubmagnet ausgebildete Bolzenabhubeinrichtung 80 auf, welche den Bolzenhalter 44 mit einer Kraft von der Mündung 46 weg nach hinten (in Fig. 2 nach oben) beaufschlagt, wenn die Bolzenabhubeinrichtung 80 aktiviert ist. Über eine nicht gezeigte Signalleitung kommuniziert die Steuereinrichtung 200 mit der Bolzenabhubeinrichtung 80, um die Bolzenabhubeinrichtung 80 zu steuern, insbesondere zu aktivieren und zu deaktivieren.

Die Schweisspistole 40 weist ferner eine als ein zweiter Hubmagnet ausgebildete Bolzeneintaucheinrichtung 90 auf, welche den Bolzenhalter 44 mit einer Kraft zu der Mündung 46 hin nach vorne (in Fig. 2 nach unten) beaufschlagt, wenn die Bolzeneintaucheinrichtung 90 aktiviert ist. Über eine nicht gezeigte Signalleitung kommuniziert die Steuereinrichtung 200 mit der Bolzeneintaucheinrichtung 90, um die Bolzeneintaucheinrichtung 90 zu steuern, insbesondere zu aktivieren und zu deaktivieren. Bei einem nicht gezeigten Ausführungsbeispiel ist die Bolzeneintaucheinrichtung als ein Federelement ausgebildet, welches gespannt wird, wenn der Bolzenhalter von der Bolzenabhubeinrichtung nach hinten bewegt wird, und welches den Bolzenhalter nach vorne bewegt, sobald die Bolzenabhubeinrichtung deaktiviert wird.

Die Schweisspistole 40 weist ferner eine Beeinflussungseinrichtung 100 zur Beeinflussung der von der Bolzeneintaucheinrichtung 90 bewirkten Geschwindigkeit des Schweissbolzens auf. Die Beeinflussungseinrichtung 100 umfasst die als der erste Hubmagnet ausgebildete Bolzenabhubeinrichtung 80 als einen ersten Aktor und die als der zweite Hubmagnet ausgebildete Bolzeneintaucheinrichtung 90 als einen zweiten Aktor. In diesem Fall wirkt der zweite Aktor gegenüber dem ersten Aktor in entgegengesetzter Richtung. Bei einem nicht gezeigten Ausführungsbeispiel wirkt der zweite Aktor in der gleichen Richtung wie der erste Aktor. In beiden Fällen wird die Geschwindigkeit des Schweissbolzens dadurch beeinflusst, dass die Bolzenabhubeinrichtung 80 und die Bolzeneintaucheinrichtung 90 von der Steuereinrichtung 200 abwechselnd und/oder gleichzeitig aktiviert und deaktiviert werden. Dadurch ist es möglich, die von der Bolzeneintaucheinrichtung 90 hervorgerufene Bewegung des Schweissbolzens 20 mehrfach zu verzögern und/oder umzudrehen.

Die Schweisspistole 40 weist ferner eine Detektionseinrichtung 210 zur Erfassung von beim Schweissvorgang erzeugten Emissionen. Die Detektionseinrichtung 210 umfasst beispielsweise einen Vibrationssensor, ein Mikrofon, einen Temperatursensor, einen Strahlungssensor, eine Kamera oder dergleichen für die Erfassung von akustischen, elektrischen, magnetischen und/oder optischen Emissionen. Über eine nicht gezeigte Signalleitung kommuniziert die Steuereinrichtung 200 mit der Detektionseinrichtung 210, um Signale, welche die erfassten Emissionen repräsentieren, zu empfangen und die Steuerung des Schweissvorgangs entsprechend vorzunehmen.

Die Schweisspistole 40 weist ferner eine Identifikationseinrichtung 220 zur Erfassung einer oder mehrerer Bolzeneigenschaften des Schweissbolzens 20 auf. Die Identifikationseinrichtung 220 eignet sich zur Erfassung geometrischer Bolzeneigenschaften wie beispielsweise einer Länge und/oder einer Breite und/oder eines Durchmessers des Schweissbolzens 20. Bei nicht gezeigten Ausführungsbeispielen eignet sich die Identifikationseinrichtung zur Erfassung eines Materials des Schweissbolzens oder eines werkseitig an dem Schweissbolzen angebrachten Identifikationselements des Schweissbolzens. Die Schweisspistole 40 weist ferner Bolzenhalteridentifikationseinrichtung 270, welche dafür vorgesehen ist, ein an dem Bolzenhalter 44 angebrachtes Identifikationselement zu erfassen. Wenn jeder Bolzentyp einem Bolzenhaltertyp zugeordnet ist, ermöglicht dies eine indirekte Erfassung der Bolzeneigenschaften. Beispielsweise eignet sich der Bolzenhalter 44 nur zum Halten von Bolzen eines bestimmten Durchmessers, so dass sich von der Erfassung des Bolzenhalters 44 auf den Durchmesser des Schweissbolzens 20 schliessen lässt. Über eine nicht gezeigte Signalleitung kommuniziert die Steuereinrichtung 200 mit der Identifikationseinrichtung, um Signale, welche die erfassten Bolzeneigenschaften repräsentieren, zu empfangen und die Steuerung des Schweissvorgangs entsprechend vorzunehmen. Bei einem nicht gezeigten Ausführungsbeispiel ist das Identifikationselement an einer Verpackung des Schweissbolzens angebracht und wird beispielsweise per QR-Code oder RFID eingelesen, insbesondere mit Hilfe eines Mobiltelefons oder ähnlichem Gerät.

Die Schweisspistole 40 umfasst ferner eine Spannungserfassungseinrichtung 231 zur Erfassung einer zwischen dem Schweissbolzen 20 und dem Untergrund 30 anliegenden elektrischen Spannung während des Schweissvorgangs und eine Stromstärkeerfassungseinrichtung 232 zur Erfassung einer zwischen dem Schweissbolzen 20 und dem Untergrund 30 fliessenden Stromstärke während des Schweissvorgangs. Die Spannungserfassungseinrichtung 231 umfasst dafür vorzugsweise einen beispielsweise an der Mündung 46 angebrachten Messkontakt zum Abgreifen des elektrischen Potentials des Untergrunds 30. Über eine nicht gezeigte Signalleitung kommuniziert die Steuereinrichtung 200 mit der Spannungserfassungseinrichtung 231 und der Stromstärkeerfassungseinrichtung 232, um Signale, welche die elektrische Spannung beziehungsweise die Stromstärke repräsentieren, zu empfangen, in einem ihrer Datenspeicher zu speichern, und einen oder mehrere Parameter eines nachfolgenden Schweissvorgangs in Abhängigkeit von den von den Erfassungseinrichtungen 231, 232 während eines vorangegangenen Schweissvorgangs erfassten Parametern zu steuern.

Die erfasste elektrische Spannung und/oder Stromstärke dienen als Parameter, welche eine das Material des Schweissbolzens und/oder des Untergrunds beaufschlagende Wärmeleistung charakterisieren. Die Wärmeleistung ist dabei das Produkt aus der elektrischen Spannung und der Stromstärke. Bei konstanter Stromstärke reicht bereits die elektrische Spannung aus, die Wärmeleistung zu charakterisieren. Die Steuereinrichtung 200 ist dazu geeignet, eine in das Material des Schweissbolzens 20 und/oder des Untergrunds 30 eingebrachte Wärmeenergie oder eine die Wärmeenergie charakterisierende Grösse aus der erfassten Wärmeleistung beziehungsweise dem die Wärmeleistung charakterisierenden Parameter zu berechnen, beispielsweise durch Aufsummieren des Produkts aus elektrischer Spannung und Stromstärke beziehungsweise nur der elektrischen Spannung über die Zeit.

Erfindungsgemäß ist die Steuereinrichtung 200 dazu geeignet, die erfasste Wärmeleistung beziehungsweise den die Wärmeleistung charakterisierenden Parameter vor dem Aufsummieren mit einem Gewichtungsfaktor zu multiplizieren, der sich während des Schweissvorgangs mit der Zeit ändert. Weiterhin eignet sich die Steuereinrichtung 200 erfindungsgemäß zum Abschalten des Schweissstroms, wenn die in das Material des Schweissbolzens und/oder des Untergrunds eingebrachte Wärmeenergie beziehungsweise die die Wärmeenergie charakterisierende Grösse einen vorbestimmten Wert für die einzubringende Schweissenergie erreicht hat. Der vorbestimmte Wert ist zuvor von einem Anwender der Schweisspistole 40 eingebbar oder aufgrund einer oder mehrerer Grössen, welche eine gewünschte in das Material des Schweissbolzens und/oder des Untergrunds eingebrachte Wärmeenergie beeinflussen, wie eine Umgebungstemperatur, eine Abmessung und/oder ein Material des Schweissbolzens und/oder des Untergrunds oder dergleichen, einstellbar.

Weiterhin ist die Steuereinrichtung 200 dazu geeignet, einen zeitlichen Verlauf der das Material des Schweissbolzens und/oder des Untergrunds beaufschlagenden Wärmeleistung beziehungsweise des die Wärmeleistung charakterisierenden Parameters aufzuzeichnen und auf einen nicht ordnungsgemäss verlaufenen Schweissvorgang zu schliessen, wenn der aufgezeichnete Verlauf der Wärmeleistung beziehungsweise des die Wärmeleistung charakterisierenden Parameters von einem vorgegebenen Verlauf abweicht. In diesem Fall justiert die Steuereinrichtung 200 während desselben oder eines nachfolgenden Schweissvorgangs ein oder mehrere Schweissparameter, wie die elektrische Spannung und/oder die Stromstärke des Schweissstroms, die Geschwindigkeit, Position oder Bewegungsrichtung des Schweissbolzens, nach.

Die Schweisspistole 40 umfasst ferner eine Bestimmungseinrichtung 260 zur Bestimmung einer zeitlichen Dauer der Eintauchbewegung und einer Geschwindigkeit des Schweissbolzens während der Eintauchbewegung des Schweissbolzens 20. Zur Bestimmung der Position des Schweissbolzens vor der Abhubbewegung und nach der Eintauchbewegung eignet sich die Positionserfassungseinrichtung 250, und die Steuereinrichtung 200 eignet sich dazu, einen Unterschied zwischen diesen beiden Positionen zu bestimmen und die Qualität der Schweissverbindung zwischen dem Schweissbolzen 20 und dem Untergrund 30 zu beurteilen.

Die Schweisspistole 40 weist ferner eine Eingabeeinrichtung 151 mit einem Betätigungselement 152 sowie eine Ausgabeeinrichtung 153 mit einem visuellen Anzeigeelement und einer drahtlosen Übertragungseinheit auf. Die Eingabeeinrichtung 151 dient der Eingabe von Parametern eines mit der Schweisspistole 40 durchzuführenden Schweissverfahrens, wie beispielsweise der elektrischen Spannung, Stromstärke, Leistung und zeitlichen Dauer des Schweissstroms, Position und Geschwindigkeit des Bolzens, in das Material des Schweissbolzens und/oder des Untergrunds einzubringende Schweissenergie und so weiter, durch einen Anwender der Schweisspistole 40. Die Ausgabeeinrichtung 153 dient der Ausgabe von Informationen, wie beispielsweise Informationen über Parameter des Schweissverfahrens, Informationen über erfasste Emissionen des Schweissverfahrens oder andere Grössen, Informationen über eine Güte des Schweissvorgangs, Informationen über Massnahmen zur Verbesserung des Schweissvorgangs, Informationen über erfasste Eigenschaften des Schweissbolzens oder aus den vorgenannten Grössen abgeleitete Informationen, und/oder Empfehlungen oder Anweisungen zur Reinigung und/oder Wartung der Schweisspistole 40 an den Anwender. Über nicht gezeigte Signalleitungen kommuniziert die Steuereinrichtung 200 mit der Eingabeeinrichtung 151 und der Ausgabeeinrichtung 153, um Informationen, welche mittels der Eingabeeinrichtung 151 eingegeben werden, zu empfangen, beziehungsweise Informationen, welche ausgegeben werden sollen, an die Ausgabeeinrichtung 153 zu senden.

Die Schweisspistole 40 weist ferner eine Orientierungserkennungseinrichtung 290 zur Erkennung einer Orientierung der Schweisspistole 40 in Bezug auf die Richtung der Gravitation auf. Die Orientierungserkennungseinrichtung 290 erkennt beispielsweise, ob die Schweisspistole 40 während des Schweissvorgangs nach unten, zur Seite oder nach oben ausgerichtet ist. Die Orientierungserkennungseinrichtung 290 ermittelt die Orientierung der Schweisspistole 40 beispielsweise durch Auswertung der Beschleunigung des Bolzenhalters während einer Hubbewegung oder durch Auswertung eines zeitlichen Verlaufs der elektrischen Spannung des Schweissstroms. Die Information über die Orientierung der Schweisspistole 40 dient einer verbesserten Steuerung der Parameter des Schweissvorgangs.

Als Teil einer Einrichtung zum Auffinden einer für den Schweissbolzen vorgegebenen Schweissstelle umfasst die Schweisspistole 40 ferner eine Erkennungseinrichtung 240 zum Erkennen eines elektrischen Kontaktwiderstands zwischen der Schweisspistole 40, insbesondere der Mündung 46 oder dem Bolzenhalter 44, und dem Untergrund 30 und/oder zwischen dem Schweissbolzen 20 und dem Untergrund 30. Zusätzlich umfasst die Einrichtung zum Auffinden einer für den Schweissbolzen vorgegebenen Schweissstelle eine Positionserfassungseinrichtung 250 zur Erfassung der Position des Schweissbolzens 20 und des Bolzenhalters 44 gegenüber der übrigen Schweisspistole 40, um einen Höhenunterschied zwischen der vorgegebenen Stelle und der übrigen Oberfläche des Untergrunds zu erkennen. Über eine nicht gezeigte Signalleitung kommuniziert die Steuereinrichtung 200 mit der Erkennungseinrichtung 240 und der Positionserfassungseinrichtung 250, um Signale, welche den Kontaktwiderstand beziehungsweise die Position des Schweissbolzens 20 und des Bolzenhalters 44 repräsentieren, zu empfangen und zu verarbeiten.

Als weiteren Teil der Einrichtung zum Auffinden der für den Schweissbolzen 20 vorgegebenen Schweissstelle umfasst die Schweisspistole eine Projektionseinrichtung 280 zur Projektion einer oder mehrerer Hilfslinien auf den Untergrund 30. Die Projektionseinrichtung 280 weist dafür beispielsweise einen Laser auf, welcher die Hilfslinien auf den Untergrund 30 projiziert. Die Hilfslinien zeigen einem Anwender der Schweisspistole 40 die Stelle auf dem Untergrund 30 an, an die der Schweissbolzen 20 bei der jeweiligen Position der Schweisspistole 40 geschweisst wird.

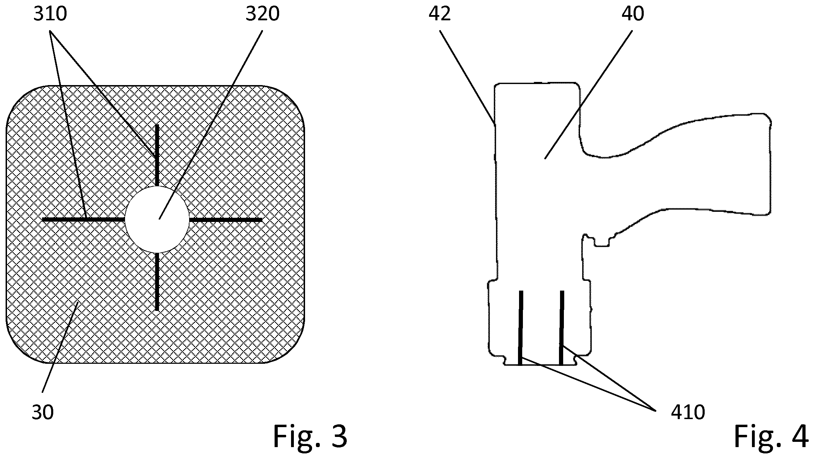

Fig. 3 zeigt Hilfslinien 310, welche von der Projektionseinrichtung 280 auf den Untergrund 30 projiziert werden. Der Anwender zeichnet vor dem Schweissvorgang an der gewünschten Schweissstelle 320 für den Schweissbolzen 20 ein Linienkreuz. Danach nimmt er die Schweisspistole 40 in die Hand, bringt die Hilfslinien 310 mit dem gezeichneten Linienkreuz in Deckung und behält die so erhaltene Position der Schweisspistole 40 während des Schweissvorgangs bei.

Fig. 4 zeigt als weiteren Teil der Einrichtung zum Auffinden der für den Schweissbolzen 20 vorgegebenen Schweissstelle linienförmige Markierungen 410, welche aussen an dem Gehäuse 42 der Schweisspistole 40 angebracht sind. Damit hat der Anwender die Möglichkeit, die Markierungen 410 mit einem an der vorgegebenen Schweissstelle gezeichneten Linienkreuz in Flucht zu bringen, um die Schweisspistole 40 sicher in die gewünschte Position zu bringen. Bevorzugt weist das Gehäuse 42 vier Markierungen 410 auf, welche in gleichen Winkelabständen von 90° an einem Umfang des Gehäuses 42 angebracht sind.

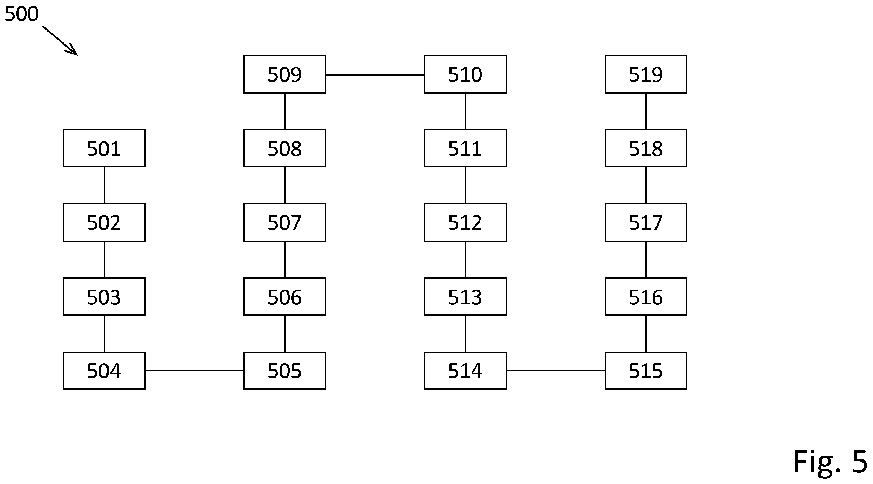

Fig. 5 zeigt schematisch ein Verfahren 500 zum Schweissen eines Schweissbolzens an einen Untergrund, beispielsweise des Schweissbolzens 20 an den Untergrund 30. In einem ersten Schritt 501 wird der Untergrund zur Verfügung gestellt. In einem weiteren Schritt 502 wird eine Schweissvorrichtung mit einer Steuereinrichtung zur Verfügung gestellt. In einem weiteren Schritt 503 wird ein Schweissbolzen zur Verfügung gestellt.

In einem weiteren Schritt 504 werden von einem Anwender über eine Eingabeeinrichtung Informationen eingegeben, beispielsweise über gewünschte Parameter des folgenden Schweissvorgangs. In einem weiteren Schritt 505 werden mittels einer Identifikationseinrichtung eine oder mehrere Bolzeneigenschaften des Schweissbolzens erfasst, beispielsweise eine Länge und/oder eine Breite und/oder ein Durchmesser und/oder ein Material und/oder ein werkseitig an dem Schweissbolzen oder dessen Verpackung angebrachtes Identifikationselement des Schweissbolzens. In einem weiteren Schritt 506 werden Informationen über die erfassten Bolzeneigenschaften und/oder aus den erfassten Bolzeneigenschaften abgeleitete Informationen über eine Ausgabeeinrichtung ausgegeben.

In einem weiteren Schritt 507 wird der Schweissbolzen mit einem Schweissstrom zwischen dem Schweissbolzen und dem Untergrund beaufschlagt. In einem weiteren Schritt 508 wird der Schweissbolzen mittels einer Bolzenabhubeinrichtung von dem Untergrund unter Beibehaltung des zwischen dem Schweissbolzen und dem Untergrund fliessenden Schweissstroms abgehoben, wobei sich zwischen dem Schweissbolzen und dem Untergrund ein Lichtbogen ausbildet. In einem weiteren Schritt 509 wird, insbesondere aufgrund der von dem Lichtbogen erzeugten Hitze, ein Material des Schweissbolzens und/oder des Untergrunds teilweise verflüssigt.

In einem weiteren Schritt 510 wird der Schweissbolzen mittels einer Bolzeneintaucheinrichtung in das verflüssigte Material des Schweissbolzens beziehungsweise des Untergrunds eingetaucht. In einem weiteren Schritt 511 werden als Parameter des Schweissvorgangs eine elektrische Spannung und/oder eine Stromstärke des Schweissstroms, und/oder eine Geschwindigkeit und/oder eine Position und/oder eine Bewegungsrichtung des Schweissbolzens gesteuert. Um die Geschwindigkeit des Schweissbolzens zu beeinflussen, während der Schweissbolzen in das verflüssigte Material des Schweissbolzens beziehungsweise des Untergrunds eingetaucht wird, werden ein erster Aktor und ein zweiter Aktor von der Steuereinrichtung aktiviert, wobei der zweite Aktor gegenüber dem ersten Aktor in entgegengesetzter Richtung wirkt. Eine Bewegung des Schweissbolzens während des Eintauchens in das verflüssigte Material des Schweissbolzens beziehungsweise des Untergrunds wird dabei mehrfach umgedreht, so dass sich die Konsistenz des verflüssigten Materials unter Umständen vergleichmässigt.

In einem weiteren Schritt 512 werden mittels einer Detektionseinrichtung beim Schweissvorgang erzeugte Emissionen erfasst. In einem weiteren Schritt 513 werden mittels einer Bestimmungseinrichtung eine elektrische Spannung und/oder eine Stromstärke des Schweissstroms, und/oder eine Geschwindigkeit und/oder eine Position und/oder eine Bewegungsrichtung des Schweissbolzens bestimmt.

In einem weiteren Schritt 514 erstarrt das verflüssigte Material des Schweissbolzens und/oder des Untergrunds, so dass der Schweissbolzen stoffschlüssig mit dem Untergrund verbunden ist. In einem weiteren Schritt werden ein oder mehrere Parameter des Schweissvorgangs erfasst und gespeichert.

In einem weiteren Schritt 515 werden während eines aktuellen Schweissvorgangs von der Erfassungseinrichtung erfasste Parameter mit in dem Datenspeicher gespeicherten Parametern verglichen. In einem weiteren Schritt 516 werden Unterschiede zwischen den von der Erfassungseinrichtung während des aktuellen Schweissvorgangs erfassten Parametern und den in dem Datenspeicher gespeicherten Parametern und/oder aus solchen Unterschieden abgeleitete Informationen ausgegeben. Bevorzugt umfassen die abgeleiteten Informationen eine Empfehlung und/oder Aufforderung zur Reinigung und/oder Wartung der Vorrichtung. Die erfassten Parameter des Schweissvorgangs umfassen eine elektrische Spannung und/oder eine Stromstärke des Schweissstroms, und/oder eine Geschwindigkeit und/oder eine Position und/oder eine Bewegungsrichtung des Schweissbolzens und/oder eine Anzahl durchgeführter Schweissvorgänge.

Die erfasste elektrische Spannung und/oder Stromstärke dienen als Parameter, welche eine das Material des Schweissbolzens und/oder des Untergrunds beaufschlagende

Wärmeleistung charakterisieren. Die Wärmeleistung ist dabei das Produkt aus der elektrischen Spannung und der Stromstärke. Bei konstanter Stromstärke reicht bereits die elektrische Spannung aus, die Wärmeleistung zu charakterisieren. Eine in das Material des Schweissbolzens 20 und/oder des Untergrunds 30 eingebrachte Wärmeenergie oder eine die Wärmeenergie charakterisierende Grösse wird aus der erfassten Wärmeleistung beziehungsweise dem die Wärmeleistung charakterisierenden Parameter berechnet, indem das Produkt aus elektrischer Spannung und Stromstärke beziehungsweise nur die elektrische Spannung über die Zeit aufsummiert wird. Erfindungsgemäß wird die erfasste Wärmeleistung beziehungsweise der die Wärmeleistung charakterisierende Parameter vor dem Aufsummieren mit einem Gewichtungsfaktor multipliziert, der sich während des Schweissvorgangs mit der Zeit ändert.

Wenn die in das Material des Schweissbolzens und/oder des Untergrunds eingebrachte Wärmeenergie beziehungsweise die die Wärmeenergie charakterisierende Grösse einen vorbestimmten Wert für die einzubringende Schweissenergie erreicht hat, wird der Schweisstrom abgeschaltet. Dadurch wird sichergestellt, dass eine gewünschte Schweissenergie in die Schweissverbindung eingebracht wird, insbesondere auch bei sich ändernder elektrischer Leistung.

Der vorbestimmte Wert wird zuvor von einem Anwender der Schweisspistole 40 eingegeben, beispielsweise in Schritt 504, oder aufgrund einer oder mehrerer Grössen, welche eine gewünschte in das Material des Schweissbolzens und/oder des Untergrunds eingebrachte Wärmeenergie beeinflussen, wie eine Umgebungstemperatur, eine Abmessung und/oder ein Material des Schweissbolzens und/oder des Untergrunds oder dergleichen, eingestellt. Diese die eingebrachte Wärmeenergie beeinflussenden Grössen werden zum Teil erfasst und zum Teil von einem Anwender zur Verfügung gestellt, beispielsweise in Schritt 504.

Weiterhin wird ein zeitlicher Verlauf der das Material des Schweissbolzens und/oder des Untergrunds beaufschlagenden Wärmeleistung beziehungsweise des die Wärmeleistung charakterisierenden Parameters aufgezeichnet. Wenn der aufgezeichnete Verlauf der Wärmeleistung beziehungsweise des die Wärmeleistung charakterisierenden Parameters von einem vorgegebenen Verlauf abweicht, wird auf einen nicht ordnungsgemäss verlaufenen Schweissvorgang geschlossen und während desselben oder eines nachfolgenden Schweissvorgangs ein oder mehrere Schweissparameter, wie die elektrische Spannung und/oder die Stromstärke des Schweissstroms, die Geschwindigkeit, Position oder Bewegungsrichtung des Schweissbolzens, nachjustiert.

In einem weiteren Schritt 516 werden ein oder mehrere Parameter eines nachfolgenden Schweissvorgangs in Abhängigkeit von den während eines vorangegangenen Schweissvorgangs erfassten Parametern gesteuert.

In einem weiteren Schritt 517 werden über eine Ausgabeeinrichtung Informationen ausgegeben. Bei den ausgegebenen Informationen handelt es sich beispielsweise um Informationen über die erfassten Emissionen und/oder um aus den erfassten Emissionen abgeleitete Informationen, beispielsweise Informationen über eine Güte des Schweissvorgangs und/oder über Massnahmen zur Verbesserung des Schweissvorgangs, oder Informationen über die von der Bestimmungseinrichtung bestimmten Grössen und/oder aus den bestimmten Grössen abgeleitete Informationen
In einem weiteren Schritt 518 wird von einem Anwender nach der Durchführung eines Schweissvorgangs eine Beurteilung einer Güte des Schweissvorgangs eingegeben. In einem weiteren Schritt 519 wird eine Eingabe des Anwenders dazu verwendet, eine Güte zukünftiger Schweissvorgänge zu beurteilen.

Die Erfindung wurde anhand von Beispielen einer Vorrichtung und eines Verfahrens zum Schweissen eines Schweissbolzens an einem Untergrund beschrieben. Die Merkmale der beschriebenen Ausführungsformen sind dabei auch beliebig miteinander innerhalb einer einzigen Schweissvorrichtung beziehungsweise eines einzigen Schweissverfahrens kombinierbar. Es wird darauf hingewiesen, dass die erfindungsgemässe Vorrichtung und das erfindungsgemässe Verfahren auch für andere Zwecke geeignet sind.

## Patentansprüche

1. Vorrichtung (10) zum Schweissen eines Schweissbolzens (20) an einen Untergrund (30), mit einem Bolzenhalter (44), einem Schweissstrom-Kontaktelement (45) zur Beaufschlagung des Schweissbolzens mit einem Schweissstrom, um ein Material des Schweissbolzens und/oder des Untergrunds teilweise zu verflüssigen, einer Bolzeneintaucheinrichtung (90) zum Eintauchen des Schweissbolzens (20) in das verflüssigte Material des Schweissbolzens (20) und/oder des Untergrundes (30), wenn der Schweissbolzen (20) und/oder der Untergrund (30) aufgrund des Schweissstroms teilweise verflüssigt ist, einer Erfassungseinrichtung (231, 232) zur Erfassung einer das Material des Schweissbolzens (20) und/oder des Untergrunds (30) beaufschlagenden Wärmeleistung und/oder eines die Wärmeleistung charakterisierenden Parameters des Schweissvorgangs, einer Steuereinrichtung (200) zur Berechnung einer in das Material des Schweissbolzens (20) und/oder des Untergrunds (30) eingebrachten Wärmeenergie und/oder einer die Wärmeenergie charakterisierenden Grösse aus der erfassten Wärmeleistung beziehungsweise dem erfassten die Wärmeleistung charakterisierenden Parameter und zum Abschalten des Schweissstroms, wenn die von der Steuereinrichtung (200) berechnete in das Material des Schweissbolzens (20) und/oder des Untergrunds (30) eingebrachte Wärmeenergie beziehungsweise die von der Steuereinrichtung (200) berechnete die Wärmeenergie charakterisierende Grösse einen vorbestimmten Wert erreicht hat, **dadurch gekennzeichnet, dass** die Steuereinrichtung (200) dazu geeignet ist, die erfasste Wärmeleistung beziehungsweise den erfassten die Wärmeleistung charakterisierenden Parameter über die Zeit aufzusummieren,
**dadurch gekennzeichnet, dass** die Steuereinrichtung (200) dazu geeignet ist, die erfasste Wärmeleistung beziehungsweise den erfassten die Wärmeleistung charakterisierenden Parameter vor dem Aufsummieren mit einem Gewichtungsfaktor zu multiplizieren, der sich während des Schweissvorgangs mit der Zeit ändert..

2. Vorrichtung nach einem der vorhergehenden Ansprüche, weiterhin umfassend eine Eingabeeinrichtung (151), mit der der vorbestimmte Wert durch einen Anwender einstellbar ist.

3. Vorrichtung nach einem der vorhergehenden Ansprüche, wobei die Steuereinrichtung (200) dazu geeignet ist, den vorbestimmten Wert aufgrund einer oder mehrerer Grössen, welche eine gewünschte in das Material des Schweissbolzens (20) und/oder des Untergrunds (30) eingebrachte Wärmeenergie beeinflussen, einzustellen.

4. Vorrichtung nach einem der vorhergehenden Ansprüche, wobei die Steuereinrichtung (200) dazu geeignet ist, einen zeitlichen Verlauf der das Material des Schweissbolzens (20) und/oder des Untergrunds (30) beaufschlagenden Wärmeleistung beziehungsweise des die Wärmeleistung charakterisierenden Parameters aufzuzeichnen.

5. Vorrichtung nach Anspruch 4, wobei die Steuereinrichtung (200) dazu geeignet ist, auf einen nicht ordnungsgemäss verlaufenen Schweissvorgang zu schliessen und/oder während desselben oder eines nachfolgenden Schweissvorgangs ein oder mehrere Schweissparameter nachzujustieren, wenn der aufgezeichnete Verlauf der Wärmeleistung beziehungsweise des die Wärmeleistung charakterisierenden Parameters von einem vorgegebenen Verlauf abweicht.

6. Verfahren zum Schweissen eines Schweissbolzens (20) an einen Untergrund, mit den Schritten
a) Zur-Verfügung-Stellen eines Schweissbolzens (20),
b) Beaufschlagen des Schweissbolzens (20) mit einem Schweissstrom zwischen dem Schweissbolzen (20) und dem Untergrund (30),
c) teilweises Verflüssigen eines Materials des Schweissbolzens (20) und/oder des Untergrunds (30),
d) Erstarrenlassen des verflüssigten Materials des Schweissbolzens (20) beziehungsweise des Untergrunds (30),
e) Eintauchen des Schweissbolzens (20) in das verflüssigte Material des Schweissbolzens (20) beziehungsweise des Untergrunds (30) vor dem Erstarren,
f) Erfassen einer das Material des Schweissbolzens (20) und/oder des Untergrunds (30) beaufschlagenden Wärmeleistung und/oder eines die Wärmeleistung charakterisierenden Parameters des Schweissvorgangs während Schritt b) und/oder c),
g) Berechnen einer in das Material des Schweissbolzens (20) und/oder des Untergrunds (30) eingebrachten Wärmeenergie und/oder einer die Wärmeenergie charakterisierenden Grösse aus der erfassten Wärmeleistung beziehungsweise dem erfassten die Wärmeleistung charakterisierenden Parameter,
h) Abschalten des Schweissstroms, wenn die während Schritt g) berechnete in das Material des Schweissbolzens (20) und/oder des Untergrunds (30) eingebrachte Wärmeenergie beziehungsweise die während Schritt g) berechnete die Wärmeenergie charakterisierende Grösse einen vorbestimmten Wert erreicht hat **gekennzeichnet durch** den Schritt
i) Aufsummieren der erfassten Wärmeleistung beziehungsweise des erfassten die Wärmeleistung charakterisierenden Parameters über die Zeit,
durch den folgenden Schritt gekennzeichnet:
j) wobei die erfasste Wärmeleistung beziehungsweise der erfasste die Wärmeleistung charakterisierende Parameter vor dem Aufsummieren mit einem Gewichtungsfaktor multipliziert wird, der sich während des Schweissvorgangs mit der Zeit ändert.

7. Verfahren nach Anspruch 6, wobei der vorbestimmte Wert durch einen Anwender eingestellt wird.

8. Verfahren nach einem der Ansprüche 6 bis 7, wobei eine oder mehrere eine gewünschte in das Material des Schweissbolzens (20) und/oder des Untergrunds (30) eingebrachte Wärmeenergie beeinflussende Grössen erfasst und/oder von einem Anwender zur Verfügung gestellt werden, und wobei der vorbestimmte Wert aufgrund dieser Grössen eingestellt wird.

9. Verfahren nach einem der Ansprüche 6 bis 8, wobei ein zeitlicher Verlauf der das Material des Schweissbolzens (20) und/oder des Untergrunds (30) beaufschlagenden Wärmeleistung beziehungsweise des die Wärmeleistung charakterisierenden Parameters aufgezeichnet wird.

10. Verfahren nach Anspruch 9, wobei auf einen nicht ordnungsgemäss verlaufenen Schweissvorgang geschlossen wird, wenn der aufgezeichnete Verlauf der Wärmeleistung beziehungsweise des die Wärmeleistung charakterisierenden Parameters von einem vorgegebenen Verlauf abweicht.

11. Verfahren nach einem der Ansprüche 9 bis 10, wobei während desselben oder eines nachfolgenden Schweissvorgangs ein oder mehrere Schweissparameter nachjustiert werden, wenn der aufgezeichnete Verlauf der Wärmeleistung beziehungsweise des die Wärmeleistung charakterisierenden Parameters von einem vorgegebenen Verlauf abweicht.

## Claims

1. Device (10) for welding a welding stud (20) to a base material (30), with a stud holder (44), a welding-current contact element (45) for applying a welding current to the welding stud in order to partially liquefy a material of the welding stud and/or the base material, a stud immersing device (90) for immersing the welding stud (20) into the liquefied material of the welding stud (20) and/or the base material (30) when the welding stud (20) and/or the base material (30) is partially liquefied due to the welding current, a detecting device (231, 232) for detecting a thermal output acting on the material of the welding stud (20) and/or the base material (30) and/or a parameter of the welding operation characterizing the thermal output, a control device (200) for calculating a thermal energy introduced into the material of the welding stud (20) and/or the base material (30) and/or a variable characterizing the thermal energy from the detected thermal output or the detected parameter characterizing the thermal output and for switching off the welding current when the thermal energy calculated by the control device (200) as having been introduced into the material of the welding stud (20) and/or the base material (30) or the variable calculated by the control device (200) as characterizing the thermal energy has reached a predetermined value, **characterized in that** the control device (200) is suitable for summing the detected thermal output or the detected parameter characterizing the thermal output over time, **characterized in that** the control device (200) is suitable for multiplying the detected thermal output or the detected parameter characterizing the thermal output by a weighting factor, which changes over time during the welding operation, before the summation.

2. Device according to one of the preceding claims, also comprising an input device (151), with which the predetermined value can be set by a user.

3. Device according to one of the preceding claims, wherein the control device (200) is suitable for setting the predetermined value on the basis of one or more variables which influence a desired thermal energy introduced into the material of the welding stud (20) and/or the base material (30).

4. Device according to one of the preceding claims, wherein the control device (200) is suitable for recording a time profile of the thermal output acting on the material of the welding stud (20) and/or the base material (30) or of the parameter characterizing the thermal output.

5. Device according to Claim 4, wherein the control device (200) is suitable for concluding that a welding operation has not proceeded properly and/or for readjusting one or more welding parameters during the same or a subsequent welding operation if the recorded profile of the thermal output or of the parameter characterizing the thermal output deviates from a specified profile.

6. Method for welding a welding stud (20) to a base material, with the steps of
a) providing a welding stud (20),
b) applying a welding current to the welding stud (20) between the welding stud (20) and the base material (30),
c) partially liquefying a material of the welding stud (20) and/or the base material (30),
d) allowing the liquefied material of the welding stud (20) or the base material (30) to solidify,
e) immersing the welding stud (20) into the liquefied material of the welding stud (20) or the base material (30) before it solidifies,
f) detecting a thermal output acting on the material of the welding stud (20) and/or the base material (30) and/or a parameter of the welding operation characterizing the thermal output during step b) and/or c),
g) calculating a thermal energy introduced into the material of the welding stud (20) and/or the base material (30) and/or a variable characterizing the thermal energy from the detected thermal output or the detected parameter characterizing the thermal output,
h) switching off the welding current when the thermal energy calculated during step g) as having been introduced into the material of the welding stud (20) and/or the base material (30) or the variable calculated during step g) as characterizing the thermal energy has reached a predetermined value, **characterized by** the step of
i) summing the detected thermal output or the detected parameter characterizing the thermal output over time, **characterized by** the following step:
j) wherein the detected thermal output or the detected parameter characterizing the thermal output is multiplied by a weighting factor, which changes over time during the welding operation, before the summation.

7. Method according to Claim 6, wherein the predetermined value is set by a user.

8. Method according to either of Claims 6 and 7, wherein one or more variables which influence a desired thermal energy introduced into the material of the welding stud (20) and/or the base material (30) are detected and/or provided by a user, and wherein the predetermined value is set on the basis of these variables.

9. Method according to one of Claims 6 to 8, wherein a time profile of the thermal output acting on the material of the welding stud (20) and/or the base material (30) or of the parameter characterizing the thermal output is recorded.

10. Method according to Claim 9, wherein it is concluded that a welding operation has not proceeded properly if the recorded profile of the thermal output or of the parameter characterizing the thermal output deviates from a specified profile.

11. Method according to either of Claims 9 and 10, wherein one or more welding parameters are readjusted during the same or a subsequent welding operation if the recorded profile of the thermal output or of the parameter characterizing the thermal output deviates from a specified profile.

## Revendications

1. Dispositif (10) destiné à souder un goujon à souder (20) sur un substrat (30), avec un porte-goujon (44), un élément de contact de courant de soudage (45) destiné à soumettre le goujon à souder à l'action d'un courant de soudage pour liquéfier en partie un matériau du goujon à souder et/ou du substrat, un système d'immersion de goujon (90) destiné à immerger le goujon à souder (20) dans le matériau liquéfié du goujon à souder (20) et/ou du substrat (30), lorsque le goujon à souder (20) et/ou le substrat (30) sont en partie liquéfiés en raison du courant de soudage, un système de détection (231, 232) destiné à détecter une puissance thermique soumettant le matériau du goujon à souder (20) et/ou du substrat (30) à une action et/ou un paramètre du procédé de soudage caractérisant la puissance thermique, un système de commande (200) destiné à calculer une énergie thermique introduite dans le matériau du goujon à souder (20) et/ou du substrat (30) et/ou une grandeur caractérisant l'énergie thermique à partir de la puissance thermique détectée ou du paramètre détecté caractérisant la puissance thermique et pour couper le courant de soudage, lorsque l'énergie thermique introduite dans le matériau du goujon à souder (20) et/ou du substrat (30) calculée par le système de commande (200) ou la grandeur caractérisant l'énergie thermique calculée par le système de commande (200) a atteint une valeur prédéfinie, **caractérisé en ce que** le système de commande (200) est adapté pour additionner dans le temps la puissance thermique détectée ou le paramètre détecté caractérisant la puissance thermique, **caractérisé en ce que** le système de commande (200) est adapté pour multiplier la puissance thermique détectée ou le paramètre détecté caractérisant la puissance thermique avant l'addition à un facteur de pondération qui change dans le temps pendant le processus de soudage.

2. Dispositif selon la revendication précédente, comprenant par ailleurs un système d'entrée (151), avec lequel la valeur prédéfinie peut être réglée par un utilisateur.

3. Dispositif selon l'une des revendications précédentes, le système de commande (200) étant adapté pour régler la valeur prédéfinie en raison d'une ou de plusieurs grandeurs, qui influencent une énergie thermique souhaitée introduite dans le matériau du goujon à souder (20) et/ou du substrat (30).

4. Dispositif selon l'une des revendications précédentes, le système de commande (200) étant adapté pour enregistrer une évolution dans le temps de la puissance thermique soumettant le matériau du goujon à souder (20) et/ou du substrat (30) à une action ou du paramètre caractérisant la puissance thermique.

5. Dispositif selon la revendication 4, le système de commande (200) étant adapté pour fermer un processus de soudage qui n'a pas été effectué en bonne et due forme et/ou pour réajuster un ou plusieurs paramètres de soudage pendant le même processus de soudage ou un processus de soudage qui suit, lorsque l'évolution enregistrée de la puissance thermique ou du paramètre caractérisant la puissance thermique s'écarte d'une évolution spécifiée.

6. Procédé de soudage d'un goujon à souder (20) sur un substrat, avec les étapes
a) mise à disposition d'un goujon à souder (20),
b) soumission du goujon à souder (20) à l'action d'un courant de soudage entre le goujon à souder (20) et le substrat (30),
c) liquéfaction partielle d'un matériau du goujon à souder (20) et/ou du substrat (30),
d) solidification du matériau liquéfié du goujon à souder (20) ou du substrat (30)
e) immersion du goujon à souder (20) dans le matériau liquéfié du goujon à souder (20) ou du substrat (30) avant la solidification,
f) détection d'une puissance thermique soumettant le matériau du goujon à souder (20) et/ou du substrat (30) à une action et/ou d'un paramètre du processus de soudage caractérisant la puissance thermique pendant les étapes b) et/ou c) ;
g) calcul d'une énergie thermique introduite dans le matériau du goujon à souder (20) et/ou du substrat (30) et/ou d'une grandeur caractérisant l'énergie thermique à partir de la puissance thermique détectée ou du paramètre détecté caractérisant la puissance thermique,
h) coupure du courant de soudage lorsque l'énergie thermique introduite dans le matériau du goujon à souder (20) et/ou du substrat (30), calculée à l'étape g) ou la grandeur caractérisant l'énergie thermique calculée à l'étape g) a atteint une valeur prédéfinie, **caractérisé par** l'étape
i) addition de la puissance thermique détectée ou du paramètre détecté caractérisant la puissance thermique dans le temps, **caractérisé par** l'étape suivante :
j) la puissance thermique détectée ou le paramètre détecté caractérisant la puissance calorifique mesurée étant multiplié(e) avant l'addition à un facteur de pondération, qui change avec le temps pendant le processus de soudage.

7. Procédé selon la revendication 6, la valeur prédéfinie étant réglée par un utilisateur.

8. Procédé selon l'une des revendications 6 à 7, une ou plusieurs grandeurs souhaitées influençant l'énergie thermique introduite dans le matériau du goujon à souder (20) et/ou du substrat (30) étant détectées et/ou mises à disposition par un utilisateur, et la valeur prédéfinie étant réglée sur la base desdites grandeurs.

9. Procédé selon l'une des revendications 6 à 8, une évolution dans le temps de la puissance thermique soumettant le matériau du goujon à souder (20) et/ou du substrat (30) à une action ou du paramètre caractérisant la puissance thermique étant enregistrée.

10. Procédé selon la revendication 9, un processus de soudage qui n'a pas été effectué en bonne et due forme étant conclu lorsque l'évolution enregistrée de la puissance thermique ou du paramètre caractérisant la puissance thermique s'écarte d'une évolution spécifiée.

11. Procédé selon l'une des revendications 9 à 10, un ou plusieurs paramètres de soudage étant réajustés pendant le même processus de soudage ou pendant un processus de soudage qui suit lorsque l'évolution enregistrée de la puissance thermique ou du paramètre caractérisant la puissance thermique s'écarte d'une évolution spécifiée.
